# EUROPÄISCHE PATENTSCHRIFT

(11) **EP 2 381 129 B1**
(45) Veröffentlichungstag und Bekanntmachung des Hinweises auf die Patenterteilung: **20.11.2019**
(21) Anmeldenummer: 11003108.5
(22) Anmeldetag: 13.04.2011
(51) Int. Cl.: F16H 1/06, F02B 39/00, F04D 29/051, F02B 33/34, F02B 33/40, F02B 39/12, F04D 25/02, F04D 25/06, F04D 25/16, F16H 57/021

(54) **Getriebe, insbesondere Verdichtergetriebe und Verfahren zur Verbesserung des Anfahrverhaltens eines solchen**
Drive, in particular compactor drive and method for improving the method for starting same
Engrenage, notamment engrenage de compresseur et procédé d'amélioration du comportement de démarrage de celui-ci

(30) Priorität: 21.04.2010 DE 102010015724
(43) Veröffentlichungstag der Anmeldung: 26.10.2011
(73) Patentinhaber: Voith Patent GmbH, 89522 Heidenheim (DE)
(72) Erfinder: Kraus, Clemens, 87527 Sonthofen (DE); Kempter, Ulrich, 87545 Burgberg (DE)
(74) Vertreter: Dr. Weitzel & Partner

(56) Entgegenhaltungen:
- CH-A- 449 659
- DE-A1- 10 003 018
- DE-B3-102006 049 516
- US-A- 4 688 989

## Beschreibung

Die vorliegende Erfindung betrifft ein Getriebe, insbesondere Verdichtergetriebe, wobei das Getriebe zwischen einer Antriebsmaschine und einem anzutreibenden Aggregat angeordnet ist, sowie ein Verfahren zur Verbesserung des Anlaufverhaltens beim Anfahren eines solchen Getriebes.

Bevorzugt finden derartige Getriebe in Aggregaten, insbesondere in Industrieanlagen, Verwendung. Solche Aggregate können beispielsweise schnelllaufende Verdichteranlagen (Turboverdichter) sein.

Dabei sind hohe Ansprüche an die Lagerung der insbesondere schnelllaufenden Getriebewellen gestellt, welche z.B. über gerade- oder schrägverzahnte Ritzel und Zahnräder Übersetzungsstufen des Getriebes bilden.

Bekannte Lagerungen zielen auf das Abstützen auftretender Axialkräfte mittels Axiallagern, insbesondere Axialgleitlagern und bevorzugt mittels hydrodynamischen Gleitlagerungen. Letztere beruhen auf dem Prinzip, dass in die Gleitpaarung des Lagers (die Reibkraft tragenden Gleitflächen, welche vom Wellenzapfen und der Lagerschale des Lagers gebildet werden) ein Volumenstrom an Schmiermittel herangeführt wird, sodass sich ab einer gewissen Drehzahl des Wellenzapfens ein hydrodynamischer Schmierfilm zwischen den beiden Reibpartnern ausbildet, der den Wellenzapfen schließlich trägt. Derartige hydrodynamische Gleitlager haben sich insbesondere bei schnelllaufenden Wellen als günstig erwiesen. Dies liegt daran, dass der Wellenzapfen im Wesentlichen nicht direkt, zum Beispiel über Festkörperreibung, mit der Lagerschale in Kontakt kommt und somit keinen zusätzlichen Verschleiß des Lagers verursacht.

Auch wurde bereits vorgeschlagen, Wellen mittels sogenannter Druckkämme, welche nach Art des hydrodynamischen Gleitlagers funktionieren, abzustützen. Dabei ist im Bereich des Ritzels ein radialer Vorsprung auf der Welle vorgesehen, welcher unter Bildung eines Axial- sowie Radialspalts in einer Ringnut, welche als Lagerschale fungiert, eingebracht ist. Bei Drehrichtungsumkehr der abzustützenden Welle erfolgt eine Umkehrung der Axialkraftrichtung, sodass bevorzugt beidseits des Ritzels ein solcher Druckkamm vorgesehen wird. Dabei ist die Welle sozusagen schwimmend in den Druckkämmen gelagert. Das bedeutet, sie kann sich um ein Axialspiel (Druckkammspiel) im Wesentlichen entlang ihrer Längsachse bewegen. Derartige Druckkämme sorgen vor allem bei schnelllaufenden Wellen für einen verbesserten Wirkungsgrad des Getriebes.

Zwar hat sich der Einsatz solcher Druckkämme in der Vergangenheit bewährt, jedoch ist die Abstützung über den Druckkamm wie allgemein bei hydrodynamischen Gleitlagern erst nach Erreichen einer bestimmten Relativdrehzahl der Welle effektiv. Das liegt daran, dass sich der Schmierfilm im Druckkamm bei geringen Drehzahlen nicht stabil ausbilden kann. Von großem Nachteil ist, dass sich ein solcher tragfähiger Schmierfilm erst nach einer relativ langen Zeit einstellt, eben nachdem die bestimmte Drehzahl der Welle erreicht wurde. Dies gilt besonders für Anfahrvorgänge derartig gelagerter Wellen aus dem Stillstand.

Werden nun die vorgehend beschriebenen Getriebe samt der angesprochenen Lager, wie sie die Erfindung betrifft, zur Drehzahl-/Drehmomentwandlung in Verdichteranlagen verwendet, so verzögert sich ein rascher Aufbau eines tragfähigen Schmierfilms zusätzlich. Dies liegt daran, dass bei geringen Drehzahlen des Verdichters zusätzlich große Axialschübe, die durch Gaskräfte im Verdichter hervorgerufen werden, auftreten. Diese Axialschübe werden auf die treibende Welle des Getriebes übertragen und wirken störend auf den Schmierfilmaufbau der Druckkämme. Somit sind Druckkämme insbesondere beim Beschleunigen der damit gelagerten Welle aus dem Stillstand und Verzögern aus dem Betrieb heraus in den Stillstand erhöhten Belastungen ausgesetzt. Diese Belastungen können den Gesamtwirkungsgrad dieser Lagerung herabsenken und zur Lebensdauerverringerung derselben führen.

CH 449 659 A bildet den Oberbegriff von Anspruch 1. Gleiches gilt für DE 10 2006 049 516.

Der Oberbegriff von Anspruch 9 ist aus DE 100 03 018 A1 gebildet.

Aufgabe der vorliegenden Erfindung ist es, ein Getriebe anzugeben, welches gegenüber den Nachteilen des Standes der Technik verbessert ist. Dabei soll insbesondere beim Anfahren des Getriebes ein rascher Schmierölaufbau in den Lagern erzielt werden. Weiterhin sollen die Axialbelastungen insbesondere beim Anfahrvorgang von den Lagern optimal aufgenommen werden, bei gleichzeitig geringem Verschleiß und langer Lebensdauer des Getriebes und dessen Lager. Ferner soll ein Verfahren angegeben werden, mittels dem das Anfahrverhalten des Getriebes verbessert werden kann.

Die Aufgabe wird gemäß den unabhängigen Ansprüchen gelöst. Die abhängigen Ansprüche stellen besonders bevorzugte Ausführungsformen der Erfindung dar.

Das erfindungsgemäße Getriebe, welches insbesondere als Verdichtergetriebe zwischen einer Antriebsmaschine und einem anzutreibenden Aggregat angeordnet sein kann, umfasst eine treibende und getriebene Welle. Dabei steht die treibende Welle zur Drehzahl-/Drehmomentwandlung mit der getriebenen Welle in Triebverbindung. Weiterhin ist die getriebene Welle mittels wenigstens eines primären Axiallagers im Getriebe abgestützt. Erfindungsgemäß ist eine Anfahreinheit zur Aufnahme von Axiallasten der getriebenen Welle vorgesehen. Die Anfahreinheit umfasst ein sekundäres Axiallager. Die Anfahreinheit ist derart ausgeführt, dass bei Betätigung dieser die Axiallasten der getriebenen Welle im Wesentlichen vollständig vom sekundären Axiallager aufgenommen werden.

Das Verdichtergetriebe kann ein einstufiges Verdichtergetriebe sein.

Die treibende Welle kann dabei eine Eingangswelle des Getriebes sein, welche beispielsweise mit einer Antriebswelle der Antriebsmaschine in mechanischer Triebverbindung steht oder in eine solche schaltbar ist. Bei der getriebenen Welle kann es sich um eine Ausgangswelle des Getriebes handeln, welche mit dem anzutreibenden Aggregat in mechanischer Triebverbindung steht oder ebenfalls in eine solche schaltbar ist. Die Anfahreinheit ist dann der Ausgangswelle zur Umgehung des primären Axiallagers zugeordnet. Dabei ist mit Umgehung eine mechanische Überbrückung des primären Axiallagers gemeint. Bei dieser Umgehung wird die Ausgangswelle vorübergehend lediglich mittels des sekundären Axiallagers abgestützt. Hierzu kann die Anfahreinheit derart ausgebildet sein, dass das ihr zugeordnete sekundäre Axiallager hinsichtlich der Aufnahme der Axiallasten aktivierbar und deaktivierbar ist. Das sekundäre Axiallager kann dabei im Bereich eines Endes der Ausgangswelle angeordnet sein, sodass die gesamten Axiallasten bei aktiviertem sekundärem Axiallager von der Anfahreinheit und bei deaktiviertem sekundärem Axiallager vom primären Axiallager aufgenommen werden.

Bevorzugt ist das primäre Axiallager als hydrodynamisches Gleitlager und das sekundäre Axiallager als hydrostatisches Gleitlager ausgeführt, wobei wenigstens eine der die Reibkraft übertragenden Gleitflächen des sekundären Axiallagers aus einem selbstschmierenden Material, insbesondere einem Weichmetall hergestellt oder mit einem solchen beschichtet ist. Derartige Materialien bilden eine wichtige Notlaufeigenschaft eines Gleitlagers, nämlich dann, wenn die Ölzufuhr zeitweise ausfällt oder der Schmierfilm noch im Aufbau ist.

Bevorzugt ist das primäre Axiallager als Druckkamm ausgeführt. Somit wird hier der Druckkamm, bei insbesondere niedrigen Drehzahlen der Welle, bei denen sich kein gleichmäßiger und tragfähiger Schmierfilm im Druckkamm ausbilden kann, vom sekundären hydrostatischen Axialgleitlager mechanisch umgangen.

Erfindungsgemäß umfasst die Anfahreinheit einen druckbeaufschlagbaren Kolben, der zwischen einer Abstützposition, in der er die Ausgangswelle abstützt und deren Axiallasten aufnimmt und einer Rückstellposition, in der er im Wesentlichen keine Axiallasten aufnimmt in Axialrichtung bewegbar ist. Dabei können die Stirnseiten des Kolbens und der Ausgangswelle einander zugewandt sein, sodass diese die Gleitflächen des sekundären Axiallagers bilden. Bei Betätigung der Anfahreinheit verfährt der Kolben um einen bestimmten Hub, nämlich soweit, bis sich die beiden Stirnseiten zunächst berühren. Hierdurch kann der Kolben die Ausgangswelle in Axialrichtung in eine derartige Position verschieben, in der das beidseitige Axiallagerspiel des Druckkamms gleichgroß eingestellt wird. In dieser Lage der Ausgangswelle kann bereits beim Anlaufvorgang Schmiermittel optimal von dem Druckkamm in dessen Lagerspalt "gesogen" werden. Gleichzeitig wird ein Kontakt des Druckkammes mit dessen Laufflächen, im Wesentlichen in Axialrichtung, vermieden. Somit wird die direkte Festkörperreibung im Druckkamms minimiert, sodass dessen Lebensdauer im Wesentlichen deutlich erhöht wird.

Erfindungsgemäß ist der Kolben in einem Kolbenraum angeordnet, wobei er den Kolbenraum in einen ersten Teilraum und in einen zweiten Teilraum teilt und der Kolbenraum zur Zuführung von Schmieröl mit einer Druckölversorgung des Getriebes druckleitend verbindbar ist.

Erfindungsgemäß ist der Kolben auf seiner dem ersten Teilraum zugewandten Seite mit Schmieröl zu dessen Axialverschiebung in Richtung auf die Abstützposition beaufschlagbar.

Ist der Kolben, wie beschrieben ausgeführt, so kann durch Anlegen eines Schmieröldruckes an den Kolbenraum der Kolben aus seiner Rückstellposition in die Abstützposition in Axialrichtung verschoben werden. Mit Vorteil weist der Kolben hierzu eine Schmieröldurchführung auf, über welche das den Kolben zu dessen Axialverschiebung beaufschlagende Schmieröl aus der Druckölversorgung zu den Gleitflächen des sekundären Axiallagers gelangt. Somit wird der Schmieröldruck nicht nur zum Verschieben des Kolbens genutzt, sondern zugleich auch zur Ausbildung des hydrostatischen Gleitlagers, also des sekundären Axiallagers, herangezogen. Hierdurch kann sich in der Abstützposition des Kolbens zwischen den einander zugewandten Stirnseiten des Kolbens und der Ausgangswelle eine tragfähige Ölschicht ausbilden. Damit ist keine weitere Einrichtung zur Verschiebung des Kolbens in seine Abstützposition nötig. Gleichzeitig wird der Vorteil erzielt, dass der Kolben stets automatisch in Richtung auf seine Abstützposition herausgefahren wird, wenn die Druckölversorgung zum Kolbenraum beziehungsweise das sekundäre Axiallager aktiviert wird.

Bevorzugt kann die Anfahreinheit einen Wegaufnehmer zum Erfassen der Position des Kolbens aufweisen, welcher insbesondere über eine Leitung an eine Steuervorrichtung des Getriebes und/oder des Aggregates, insbesondere eines Getriebekompressors übermittelbar ist. Die Position kann dann zum Beispiel in einer Regelung, beispielsweise mittels Soll-Ist-Vergleich dazu genutzt werden, um gezielt die Anfahreinheit zu aktivieren, zu deaktivieren oder zu überprüfen, ob das Getriebe gerade angefahren wird oder nicht.

Ein erfindungsgemäßes Verfahren zur Verbesserung des Anfahrverhaltens eines Getriebes, insbesondere Verdichtergetriebes, welches zwischen einer Antriebsmaschine und einem anzutreibenden Aggregat angeordnet ist, wobei das Getriebe eine treibende und getriebene Welle umfasst, und die getriebene Welle mittels eines primären und eines sekundären Axiallagers im Getriebe gelagert ist, umfasst die folgenden Schritte:
- Beim Anfahren des Getriebes aus dem Stillstand wird das primäre Axiallager vorübergehend deaktiviert, während das sekundäre Axiallager aktiviert wird, sodass die gesamten Axiallasten der getriebenen Welle vom sekundären Axiallager aufgenommen werden; und
- nach Beendigung des Anfahrvorgangs wird umgekehrt das sekundäre Axiallager deaktiviert und das primäre Axiallager aktiviert, sodass die gesamten Axiallasten vom primären Axiallager abgestützt werden.

Der Vorgang des Anfahrens des Getriebes kann zum Beispiel durch die Drehzahl der treibenden und getriebenen Welle bestimmt sein. Die Beendigung des Anfahrvorgangs kann nach Erreichen einer bestimmten Zeit, einer bestimmten Relativumdrehungsgeschwindigkeit beziehungsweise einer bestimmten Drehzahl der treibenden oder getriebenen Welle des Getriebes charakterisiert sein.

Die Erfindung soll nun anhand von Ausführungsbeispielen und den beigefügten Figuren erläutert werden.

Es zeigen:
- Figur 1: eine schematische Darstellung eines Getriebes, welches in einem Antriebsstrang einer stationären Anlage angeordnet ist;
- Figur 2: eine bevorzugte Ausführungsform des Getriebes in einem Axialschnitt durch das Getriebe.

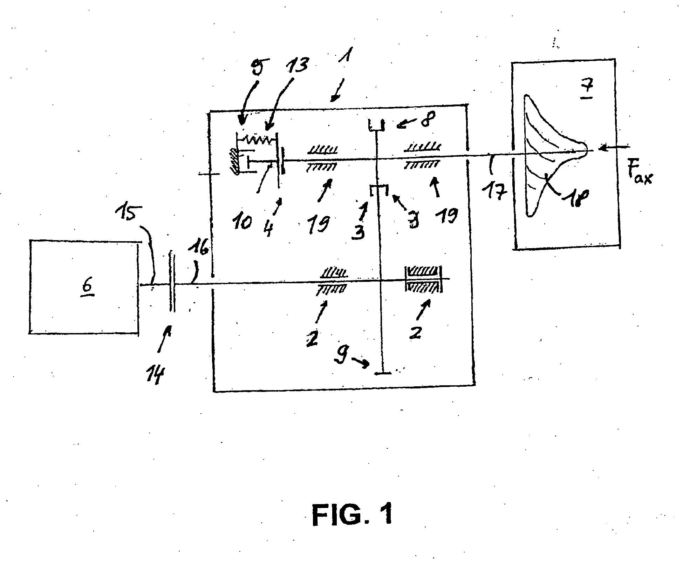

In Figur 1 ist symbolhaft ein Antriebsstrang dargestellt, der beispielsweise in einer stationären Anlage, insbesondere Turboverdichteranlage, Verwendung findet. In dem Antriebsstrang sind in Leistungsübertragungsrichtung, ausgehend von einer Antriebsmaschine 6, noch folgende Komponenten hintereinander geschaltet: eine Kupplung 14, ein Getriebe 1 sowie ein von der Antriebsmaschine 6 anzutreibendes Aggregat 7. Natürlich könnte auch die Kupplung 14 zwischen dem Getriebe 1 und dem Aggregat 7 oder innerhalb des Getriebes 1 angeordnet sein. Vorliegend ist eine Kupplungshälfte mit einer Antriebswelle 15, beispielsweise einer Kurbelwelle der Antriebsmaschine 6, und die andere Kupplungshälfte mit einer treibenden Welle des Getriebes verbunden. Die treibende Welle stellt im vorliegenden Fall gleichzeitig eine Eingangswelle 16 des Getriebes 1 dar. Weiterhin umfasst das Getriebe 1 vorliegend eine getriebene Welle, welche hier gleichzeitig die Ausgangswelle 17 des Getriebes darstellt. Die Ausgangswelle 17 dient hier zum Antreiben des Aggregates 7.

Eingangswelle 16 sowie Ausgangswelle 17 stehen über eine Mehrzahl von Drehzahl-/Drehmomentübertragungsmitteln, insbesondere in Form von Zahnrädern und Ritzeln, in Triebverbindung miteinander. Die Zahnräder und Ritzel sind dabei jeweils drehfest mit der Eingangswelle 16 sowie der Ausgangswelle 17 ausgebildet. Beispielsweise trägt die Ausgangswelle 17 ein Ritzel 8, welches mit einem Zahnrad 9 der Eingangswelle 16 zur Leistungsübertragung kämmt. Eingangswelle 16 und Ausgangswelle 17 sind vorliegend beidseitig des Ritzels 8 beziehungsweise des Zahnrads 9 radial gelagert, siehe die Radiallager 2 und 19. Natürlich wäre es denkbar, dass das Getriebe 1 mehr als eine treibende oder getriebene Welle umfasst. Ferner können die Drehzahl-/Drehmomentübertragungsmittel des Getriebes 1 als gerade- oder schrägverzahnte Ritzel oder Zahnräder ausgeführt sein.

Vorliegend sind die Eingangswelle 16 und die Ausgangswelle 17 auch axial gelagert. So weist die Ausgangswelle 17 ein primäres Axiallager 3, hier in Form eines Druckkamms auf. Dabei ist hier beidseits des Ritzels 8 ein solcher Druckkamm vorgesehen. Die beiden Druckkämme dienen der Aufnahme von Axialschüben im Nennbetrieb des Getriebes 1, nachdem dieses angefahren wurde.

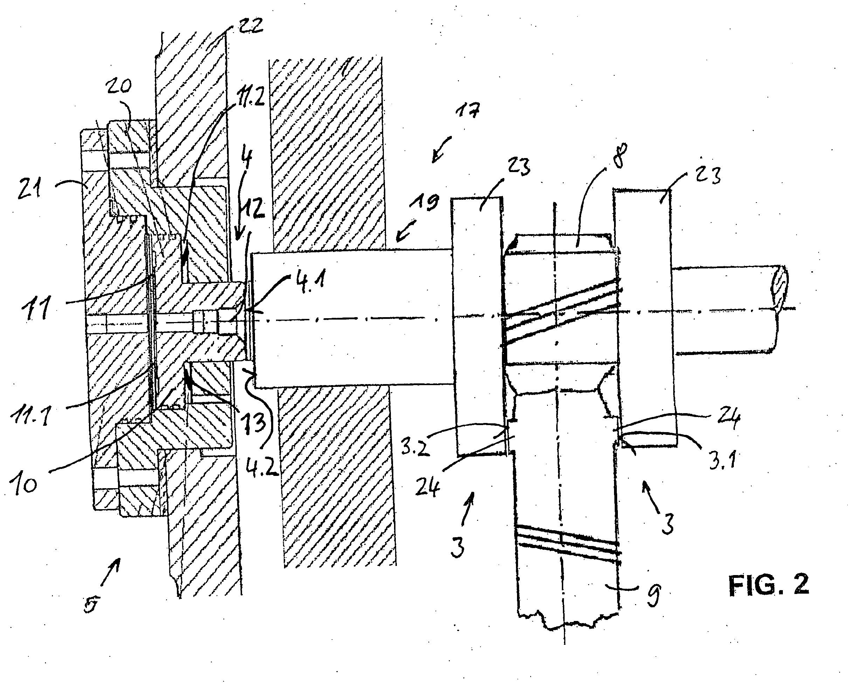

Die Druckkämme sorgen für weniger Reibungsverluste bei der Leistungsübertragung als herkömmliche Wälzlager. Weiterhin umfasst das Getriebe 1 ein sekundäres Axiallager 4. Letzteres ist Teil einer Anfahreinheit 5 umfassend einen axial verschiebbaren Kolben 10 und eine gegen den Kolben 10 vorgespannte Feder 13. Die Wirkungsweise der Anfahreinheit wird anhand von Figur 2 näher erläutert.

In der Figur 1 wird somit Antriebsleistung von der Antriebsmaschine 6, welche beispielsweise als Verbrennungskraftmaschine ausgeführt sein kann, über die Antriebswelle 15, die Kupplung 14, die Eingangswelle 16, die Ausgangswelle 17 auf das Aggregat 7 übertragen. Das Aggregat 7 kann beispielsweise ein Verdichter sein. In diesem Fall kann die Ausgangswelle 17 gleichzeitig als Rotorwelle des Verdichters ausgeführt sein und ein Laufrad 18 tragen. Ist das Aggregat 7 als Verdichter ausgeführt, so kommt es beispielsweise bei einem Anfahrvorgang des Getriebes 1 aus dem Stillstand heraus zu zusätzlichen Axiallasten der Ausgangswelle 17. Aufgrund von Gaskräften im Verdichter treten relativ hohe Axialschübe auf, hier durch den Pfeil und das Symbol Fₐₓ angedeutet. Diese Axialschübe belasten beim Anfahrvorgang besonders die beiden Druckkämme der Ausgangswelle 17 und können zur Lebensdauerherabsetzung des Getriebes 1 führen.

In Figur 2 ist eine bevorzugte Ausführungsform einer Lagerung des erfindungsgemäßen Getriebes 1 in einem Axialschnitt dargestellt. Dabei sind im Wesentlichen dieselben Elemente mit den gleichen Bezugszeichen versehen. Dort ist die Ausgangswelle 17 sowie lediglich eines der beiden Radiallager 19 dargestellt. Das Radiallager 19 kann hierbei als Wälzlager oder ebenfalls als Gleitlager, insbesondere als hydrodynamisches Gleitlager ausgeführt sein. Des Weiteren ist hier das Ritzel 8 der Ausgangswelle 17 gezeigt, welches zur Drehmomentübertragung mit dem Zahnrad 9 der Eingangswelle (hier nicht dargestellt) kämmt. Beidseits des Ritzels 8 sind wie bereits beschrieben zwei Druckkämme vorgesehen, die das primäre Axiallager 3 bilden. Jeder Druckkamm umfasst einen in Radialrichtung der Ausgangswelle 17 hervorstehenden Vorsprung 23. Letzterer weist einen größeren Außendurchmesser als das Ritzel 8 auf.

Das Zahnrad 9 umfasst vorliegend im radial äußeren Bereich beidseitig einen ringförmigen Vorsprung 24, der sich in Richtung der Drehachse des Zahnrades 9 erstreckt. Der ringförmige Vorsprung 24 ist dabei derart bemessen, dass dessen radial innerster Durchmesser innerhalb des radial äußersten Durchmessers des Vorsprungs 23 liegt, wie in der Draufsicht von Figur 2 gesehen. Die Breite des Zahnrads 9 am ringförmigen Vorsprung 24 ist so bemessen, dass zwischen den jeweils einander gegenüberliegenden Stirnflächen der Vorsprünge 23 und 24 ein bestimmter Abstand entsteht. Die gegenüberliegenden Stirnflächen bilden nun Laufflächen 3.1, 3.2 des einzelnen Druckkamms. Der jeweils zwischen ihnen liegende Abstand wird als Axialspiel (Druckkammspiel) bezeichnet. Dieses Axialspiel ermöglicht eine Bewegung der Ausgangswelle 17 entlang deren Längsrichtung. In das Axialspiel kann bei drehender Ausgangswelle 17 Schmiermittel wie Schmieröl eingezogen werden, sodass sich eine tragfähige Schicht desselben ausbilden kann. Mittels dieser tragfähige Schicht wird die Ausgangswelle 17 vom Druckkamm in Axialrichtung abgestützt. Herkömmlich kann sich eine solche Schicht insbesondere bei Anfahrvorgängen des Getriebes 1 nicht schnell genug ausbilden. Dies liegt, wie oben beschrieben, daran, dass zur Ausbildung einer solchen eine bestimmte Relativdrehzahl der Ausgangswelle 17 vorherrschen muss.

Im vorliegenden Fall ist auf der linken Seite in Figur 2 die Anfahreinheit 5 umfassend einen Grundkörper 20, einen im Grundkörper 20 axial verschiebbaren Kolben 10 sowie einen Deckel 21 angeordnet. Die Anfahreinheit 5 ist hier in einem Getriebegehäuse 22 angeordnet, welches vorliegend das gesamte Getriebe umschließt. Grundkörper 20 und Deckel 21 bilden einen Kolbenraum 11, in welchem der Kolben 10 angeordnet ist. Letzterer teilt den Kolbenraum 11 in einen ersten Teilraum 11.1 sowie einen zweiten Teilraum 11.2. Der Deckel 21 umfasst eine Bohrung, welche eine strömungsleitende Verbindung mit einer nicht gezeigten Druckölversorgung und dem Kolbenraum 11 ermöglicht. Der Kolben 10 weist weiterhin eine Schmieröldurchführung 12 auf, welche mit dem ersten Teilraum 11.1 Schmieröl leitend verbunden ist. Hierdurch kann unter Druck stehendes Schmieröl durch die Schmieröldurchführung 12 der Stirnseite des Kolbens 10 zugeführt werden, welche der Stirnseite der Ausgangswelle 17 zugewandt ist.

Wird die Druckölversorgung aktiviert, so strömt das Schmieröl durch den Deckel in den Teilraum 11.1 und drückt den Kolben 10 entgegen der Rückstellkraft der Feder 13, welche im zweiten Teilraum 11.2 angeordnet ist. Der Kolben wird somit, wie in Figur 2 dargestellt, nach rechts in Richtung auf die Ausgangswelle 17 hin verschoben. Stößt der Kolben 10 mit seiner der Ausgangswelle 17 zugewandten Stirnseite an der Stirnseite der Ausgangswelle 17 an, so verschiebt er diese um einen bestimmten Betrag in Axialrichtung. Der Hub des Kolbens 10 ist dabei so bemessen, dass sich in der Abstützposition des Kolbens 10 bei beiden Druckkämmen ein gleich großes Axialspiel einstellt. In anderen Worten wird dieser soweit verschoben, bis sich das Zahnrad 9 dann bezogen auf die beiden Vorsprünge 23 in seiner axialen Mittelstellung befindet. In dieser Stellung kann zum einen keine Festkörperreibung zwischen den Laufflächen 3.1, 3.2 der beiden Druckkämme entstehen. Zum anderen wird das Einziehen von zugeführtem Schmieröl in das Axialspiel, also zwischen die Laufflächen 3.1, 3.2 der Druckkämme erleichtert.

Dadurch, dass Schmieröl unter Druck nicht nur den Kolbenraum 11 beziehungsweise dem Teilraum 11.1, sondern auch durch den Kolben 10 zwischen die beiden einander zugewandten Stirnseiten des Kolbens 10 und der Ausgangswelle 17 zugeführt wird, wird die Ausgangswelle 17 in Axialrichtung von der Stirnseite des Kolbens 10 ein wenig abgehoben. Die einander zugewandten Stirnseiten bilden nun Gleitflächen 4.1, 4.2 des hydrostatischen Gleitlagers. Hierdurch entsteht in der Abstützposition des Kolbens 10 ein hydrostatisches Gleitlager, nämlich das sekundäre Axiallager 3.

Die Figur 2 zeigt den Kolben 10 in seiner Abstützposition. Dort ist also bei aktivierter Druckölversorgung das sekundäre Axiallager 4 aktiviert, während die beiden Druckkämme vorübergehend deaktiviert sind. In anderen Worten werden im Wesentlichen die ganzen Axiallasten der Ausgangswelle 17 vom sekundären Axiallager 4 aufgenommen. Dieses Überbrücken der Druckkämme erfolgt bevorzugt beim Anfahren des Getriebes aus dem Stillstand auf eine Betriebsdrehzahl oder beim Stillsetzen des Getriebes 1 aus seiner Betriebsdrehzahl in den Stillstand. Durch diese mechanische Umgehung der Druckkämme wird nicht nur bei relativ niedrigen Drehzahlen der Ausgangswelle 17, sondern auch bei zusätzlich auftretenden Axialschüben ein schneller Schmierfilmaufbau in den Druckkämmen erzielt. Dadurch wird die Lebensdauer des Getriebes 1 gesteigert.

Nach Beendigung des Anfahrvorgangs wird das sekundäre Axiallager 4 deaktiviert, indem die Druckölversorgung unterbunden wird, sodass kein Drucköl mehr in den Kolbenraum 11 beziehungsweise Teilraum 11.1 zur Betätigung des Kolbens 10 strömen kann. Dabei ist die Federkonstante der Feder 13, welche hier als Tellerfeder ausgeführt ist, so bemessen, dass im Wesentlichen im drucklosen Zustand des Kolbenraums 11 der Kolben 10 selbsttätig in seine zweite axiale Endstellung, die Rückstellposition, verfahren wird. Hierbei bewegt sich die der Ausgangswelle 17 zugewandte Stirnseite des Kolbens 10 von der Ausgangswelle 17 weg. Das sekundäre Axiallager 4 wird somit durch Auseinanderfahren der beiden Gleitflächen 4.1, 4.2 deaktiviert. Dabei ist der Hub des Kolbens 10 wieder so bemessen, dass die Ausgangswelle 17 auch bei Ausschöpfung des Axiallagerspiels der Druckkämme mit ihrer Stirnfläche nicht am Kolben 10 aufsitzen kann.

Durch die erfindungsgemäße Ausbildung der Anfahreinheit wird eine Sicherheitsfunktion des hydrodynamischen Gleitlagers erreicht (Fail-Safe): Sollte die Druckversorgung ausfallen, so wird der Kolben 10 automatisch in seine Rückstellposition verfahren, in der keine mechanische Reibung, insbesondere Festkörperreibung mehr mit der Stirnseite der Ausgangswelle 17 möglich ist. Dadurch wird auch ein "Fressen" des Kolbens 10 und der Ausgangswelle 17 an deren Abstützseite verhindert, wenn ungenügend Schmierfilm durch die ausgefallene Druckversorgung vorliegt.

Zusätzlich ist es denkbar, die beiden Gleitflächen des sekundären Axiallagers 4 aus selbstschmierenden Materialien zu realisieren, insbesondere mit Weichmetallen, sodass das Lager selbst bei (kurzzeitigem) Druckölausfall etwaige Notlaufeigenschaften besitzt.

### Bezugszeichenliste

- 1: Getriebe
- 2: Radiallager
- 3: primäres Axiallager
- 3.1, 3.2: Gleitfläche
- 4: sekundäres Axiallager
- 4.1, 4.2: Lauffläche
- 5: Anfahreinheit
- 6: Antriebsmaschine
- 7: Aggregat
- 8: Ritzel
- 9: Zahnrad
- 10: Kolben
- 11: Kolbenraum
- 11.1, 11.2: Teilraum
- 12: Schmieröldurchführung
- 13: Feder
- 14: Kupplung
- 15: Antriebswelle
- 16: Eingangswelle
- 17: Ausgangswelle
- 18: Laufrad
- 19: Radiallager
- 20: Grundkörper
- 21: Deckel
- 22: Getriebegehäuse
- 23, 24: Vorsprung

## Patentansprüche

1. Getriebe (1), insbesondere Verdichtergetriebe, welches zwischen einer Antriebsmaschine (6) und einem anzutreibenden Aggregat (7) angeordnet ist;
mit einer treibenden und getriebenen Welle;
die treibende Welle steht zur Drehzahl-/Drehmomentwandlung mit der getriebenen Welle in Triebverbindung;
die getriebene Welle ist mittels wenigstens eines primären Axiallagers (3) im Getriebe (1) abgestützt;
**gekennzeichnet durch** die folgenden Merkmale:
es ist eine Anfahreinheit (5) zur Aufnahme von Axiallasten der getriebenen Welle vorgesehen;
die Anfahreinheit (5) umfasst ein sekundäres Axiallager (4);
die Anfahreinheit (5) ist derart ausgebildet, dass bei deren Betätigung die Axiallasten der getriebenen Welle im Wesentlichen vollständig vom sekundären Axiallager (4) aufgenommen werden; wobei die Anfahreinheit (5) einen druckbeaufschlagten Kolben (10) umfasst, der zwischen einer Abstützposition, in der er die getriebene Welle abstützt und die Axiallasten aufnimmt, und einer Rückstellposition, in der er keine Axiallasten aufnimmt, in Axialrichtung bewegbar ist; wobei der Kolben (10) in einem Kolbenraum (11) verschiebbar angeordnet ist und den Kolbenraum (11) in einen ersten Teilraum (11.1) und einen zweiten Teilraum (11.2) unterteilt, und
der erste Teilraum (11.1) zur Druckbeaufschlagung des Kolbens (10) auf seiner dem ersten Teilraum (11.1) zugewandten Seite und zu dessen Axialverschiebung in Richtung auf die Abstützposition an einer Druckölversorgung des Getriebes (1) angeschlossen ist.

2. Getriebe gemäß Anspruch 1, **gekennzeichnet durch** die folgenden Merkmale:
das primäre Axiallager (3) ist als hydrodynamisches Gleitlager und das sekundäres Axiallager (4), als hydrostatisches Gleitlager ausgeführt.

3. Getriebe gemäß Anspruch 2, **gekennzeichnet durch** das folgende Merkmal: wenigstens eine der die Reibkraft übertragenden Gleitflächen (4.1, 4.2) des sekundären Axiallagers (4) ist aus einem selbstschmierenden Materialhergestellt oder mit einem solchen beschichtet.

4. Getriebe (1) gemäß einem der Ansprüche 1 bis 3, **dadurch gekennzeichnet, dass** der Kolben (10) eine Schmieröldurchführung (12) aufweist, über welche das den Kolben (10) zu dessen Axialverschiebung beaufschlagende Schmieröl aus der Druckölversorgung zu den die Reibkraft übertragenden Gleitflächen (4.1, 4.2) auf den einander zugewandten Stirnseiten des Kolbens (10) und der getriebenen Welle gelangt, sodass zwischen diesen eine tragfähige Ölschicht ausbildbar ist.

5. Getriebe (1) gemäß einem der Ansprüche 1 bis 4, **gekennzeichnet durch** die folgenden Merkmale:
der Kolben (10) ist mittels einer Feder (13), insbesondere Tellerfeder, vorgespannt, deren Federkraft entgegen der als Verschiebekraft wirkenden Druckkraft des Schmieröls wirkt;
die Federkonstante der Feder (13) ist derart bemessen, dass bei relativ niedrigem Schmieröldruck oder bei im Wesentlichen drucklosen Zustand des Kolbens (10) dieser im Sinne der als Rückstellkraft wirkenden Federkraft in seine Rückstellposition verschiebbar ist.

6. Getriebe (1) gemäß Anspruch 5, **dadurch gekennzeichnet, dass** die Feder (13) im zweiten Teilraum (11.2) des Kolbenraumes (11) angeordnet ist und sich mit ihrem einen Ende an einer Stirnseite des Kolbens (10) und mit ihrem anderen Ende an der Anfahreinheit (5), insbesondere an der Berandung des Kolbenraums (11) abstützt.

7. Getriebe (1) gemäß einem der Ansprüche 1 bis 6, **dadurch gekennzeichnet, dass** das primäre Axiallager (3) als Druckkamm ausgeführt ist.

8. Getriebe (1) gemäß Anspruch 7, **dadurch gekennzeichnet, dass** der Axialhub des Kolbens (10) derart bemessen ist, dass dieser bei Bewegung in die Abstützposition die getriebene Welle in eine solche Axialposition verschiebt, sodass das beidseitige Axiallagerspiel des Druckkammes im Wesentlichen gleich ist.

9. Verfahren zur Verbesserung des Anfahrverhaltens eines Getriebes (1) gemäß einem der Ansprüche 1 bis 8, **gekennzeichnet durch** die folgenden Schritte:
beim Anfahren des Getriebes (1) aus dem Stillstand wird das primäre Axiallager (3) vorübergehend deaktiviert, während das sekundäre Axiallager (4) aktiviert wird, sodass die gesamten Axiallasten der getriebenen Welle vom sekundären Axiallager (4) aufgenommen werden; und
nach Beendigung des Anfahrvorgangs wird umgekehrt das sekundäre Axiallager (4) deaktiviert und das primäre Axiallager (3) aktiviert, sodass die gesamten Axiallasten vom primären Axiallager (3) abgestützt werden.

10. Verfahren gemäß Anspruch 9, **dadurch gekennzeichnet, dass** das Getriebe (1) gemäß einem der Ansprüche 1 bis 12 ausgeführt ist und beim Anfahren des Getriebes (1) die Anfahreinheit (5) durch Zufuhr von Schmieröl aus der Druckölversorgung betätigt wird, sodass der Kolben (10) in seine Abstützposition verfahren wird und die getriebene Welle in Axialrichtung lediglich über das sekundäre Axiallager (4) abstützt wird; und nach Beendigung des Anfahrvorgangs die Druckbeaufschlagung aus der Druckölversorgung deaktiviert wird und der Kolben (10) mittels der als Rückstellkraft wirkenden Kraft der Feder (13) in seine Rückstellposition verschoben wird.

11. Verfahren gemäß einem der Ansprüche 9 oder 10, **dadurch gekennzeichnet, dass** die Position des Kolbens (10) erfasst wird und zwecks Auswertung an eine Steuereinrichtung übermittelt wird.

12. Verfahren gemäß einem der Ansprüche 9 bis 11, **dadurch gekennzeichnet, dass** die Beendigung des Anfahrvorgangs und die Deaktiverung des sekundären Axiallagers (4) sowie Aktivierung des primären Axiallagers (3) in Abhängigkeit wenigstens einer der folgenden Bedingungen ausgeführt wird:
- Erreichen einer bestimmten Zeit des Anfahrvorgangs;
- Erreichen einer bestimmten Relativumdrehungsgeschwindigkeit der treibenden oder getriebenen Welle des Getriebes (1);
- Erreichen einer bestimmten Drehzahl der treibenden oder getriebenen Welle des Getriebes (1).

## Claims

1. A transmission (1), in particular a compressor transmission, which is installed between a drive machine (6) and a unit (7) to be driven;
fitted with a drive shaft and a driven shaft;
the drive shaft is in driving connection with the driven shaft for speed/torque conversion;
the driven shaft is supported in the transmission (1) by means of at least one primary axial bearing (3);
**characterized by** the following features:
a starting unit (5) is provided for absorbing the axial loads of the driven shaft;
the starting unit (5) comprises a secondary axial bearing (4);
the starting unit (5) is formed in such a way that when said unit is actuated, the axial loads of the driven shaft are substantially completely absorbed by the secondary axial bearing (4); whereby
the starting unit (5) comprises a piston (10) which can be pressurized, wherein said piston can be moved in axial direction between a supporting position, in which it supports the driven shaft and absorbs the axial loads, and a reset position, in which it does not absorb any axial loads; whereby
the piston (10) is moveable in a piston chamber (11) and divides the piston chamber (11) into a first compartment (11.1) and a second compartment (11.2), and
the first compartment (11.1) is connected to a pressure oil supply of the transmission (1) for pressurizing the piston (10) on its side pointing to the first compartment (11.1) and for its axial movement in the direction of the reset position.

2. The transmission according to claim 1, **characterized by** the following features:
the primary axial bearing (3) is designed as a hydrodynamic slide bearing and the secondary axial bearing (4) is designed as a hydrostatic slide bearing.

3. The transmission (1) according to claim 2, **characterized by** the following feature:
at least one of the sliding surfaces (4.1, 4.2) of the secondary axial bearing (4), transmitting the friction force, is made of a self-lubricating material or coated with such a metal.

4. The transmission (1) according to one of claims 1 to 3, **characterized in that** the piston (10) exhibits a lubricating oil passage (12), via which the lubricating oil acting upon the piston (10) so as to move it axially flows from the pressure oil supply to the sliding surfaces (4.1, 4.2) transmitting the friction force so that a workable oil layer can be obtained between said elements.

5. The transmission (1) according to one of claims 1 to 4, **characterized by** the following features:
the piston (10) is preloaded by means of a spring (13), in particular a belleville spring, whose resilience opposes the compression force of the lubricating oil acting as a displacement force;
the spring constant of the spring (13) is designed in such a way that in case of relatively low lubricating oil pressure or a substantially pressure less state of the piston (10), said piston can be shifted to its reset position by the resilience acting as a reset force.

6. The transmission (1) according to claim 5, **characterized in that** the spring (13) is installed in the second compartment (11.2) of the piston chamber (11) and is supported with one of its ends on a front side of the piston (10) and with its other end on the starting unit (5), in particular on the periphery of the piston chamber (11).

7. The transmission (1) according to one of claims 1 to 6, **characterized in that** the primary axial bearing (3) is designed as a pressure pad.

8. The transmission (1) according to claim 7, **characterized in that** the axial lift of the piston (10) is designed in such a way that said piston when moving into the supporting position shifts the driven shaft in such an axial position so that the axial bearing play of the pressure pad on both sides is substantially equal.

9. A method for improving the starting behavior of a transmission (1) according to one of the claims 1 to 8,
**characterized by** the following steps:
when starting the transmission (1) from standstill, the primary axial bearing (3) is momentarily deactivated, while the secondary axial bearing (4) is activated, so that the whole axial loads of the driven shaft are absorbed by the secondary axial bearing (4); and
upon completion of the starting cycle, conversely, the secondary axial bearing (4) is deactivated and the primary axial bearing (3) activated, so that the whole axial loads are supported by the primary axial bearing (3).

10. The method according to claim 9, **characterized in that** the transmission (1) is designed according to one of the claims 1 to 12 and when starting the transmission (1) the starting unit (5) is actuated by the supply of lubricating oil from the pressure oil supply system so that the piston (10) is moved into its supporting position and the driven shaft is supported in axial direction exclusively by the secondary axial bearing (4); and
upon completion of the starting cycle the pressure applied from the pressure oil supply system is deactivated and the piston (10) is moved into its reset position by means of the force of the spring (13) acting as a reset force.

11. The method according to any of the claims 9 or 10, **characterized in that** the position of the piston (10) is acquired and is transferred to a control device for interpretation purposes.

12. The method according to any of claims 9 to 11, **characterized in that** the completion of the starting cycle and deactivating of the secondary axial bearing (4) as well as activating the primary axial bearing (3) is accomplished in dependency of at least one of the following conditions:
- a set time period of the starting cycle has elapsed;
- a certain relative rotational speed of the drive shaft or driven shaft of the transmission (1) has been reached;
- a certain revolution speed of the drive shaft or the driven shaft of the transmission (1) has been reached.

## Revendications

1. Engrenage (1), en particulier engrenage de compresseur, disposé entre une machine d'entraînement (6) et un groupe à entraîner (7),
avec un arbre menant et un arbre mené ;
l'arbre menant étant en liaison motrice avec l'arbre mené pour convertir la vitesse de rotation en couple de rotation,
l'arbre mené étant supporté dans l'engrenage (1) au moyen d'au moins un palier axial primaire (3),
**caractérisé en ce que** :
une unité de démarrage (5) est prévue pour absorber les contraintes axiales de l'arbre mené ;
l'unité de démarrage (5) comprend un palier axial secondaire (4) ;
l'unité de démarrage (5) est conformée de telle façon que, lors de son actionnement, les contraintes axiales de l'arbre mené soient absorbées de façon sensiblement complète par le palier axial secondaire (4),
l'unité de démarrage (5) comprenant un piston (10) soumis à une pression qui est mobile dans le sens axial entre une position de support dans laquelle il supporte l'arbre mené et absorbe les contraintes axiales et une position de rappel dans laquelle il n'absorbe pas de contraintes axiales,
le piston (10) étant disposé avec possibilité de translation dans un espace de piston (11) et divisant l'espace de piston (11) en une première partie d'espace (11.1) et une deuxième partie d'espace (11.2), et
la première partie d'espace (11.1) étant raccordée à une alimentation en huile sous pression de l'engrenage (1) pour soumettre le piston (10) à la pression sur sa face tournée vers la première partie d'espace (11.1) et pour le déplacer dans le sens axial vers la position de support.

2. Engrenage selon la revendication 1, **caractérisé en ce que** le palier axial primaire (3) est réalisé comme un palier lisse hydrodynamique et le palier axial secondaire (4) comme un palier lisse hydrostatique.

3. Engrenage selon la revendication 2, **caractérisé en ce qu'**au moins une des surfaces de glissement (4.1, 4.2) du palier axial secondaire (4) transmettant la force de friction est faite d'un matériau autolubrifiant ou revêtue de celui-ci.

4. Engrenage (1) selon l'une des revendications 1 à 3, **caractérisé en ce que** le piston (10) présente un passage d'huile de lubrification (12) par lequel l'huile de lubrification agissant sur le piston (10) pour le déplacer dans le sens axial parvient de l'alimentation en huile aux surfaces de glissement (4.1, 4.2) transmettant la force de friction sur les faces d'extrémité tournées l'une vers l'autre du piston (10) et de l'arbre mené, de sorte qu'une couche d'huile portante peut être formée entre celles-ci.

5. Engrenage (1) selon l'une des revendications 1 à 4, **caractérisé en ce que** :
le piston (10) est précontraint au moyen d'un ressort (13), en particulier d'une rondelle-ressort, dont la force de ressort agit contre la force de pression de l'huile de lubrification servant de force de translation ;
la constante de ressort du ressort (13) est dimensionnée de telle manière qu'à une pression d'huile de lubrification relativement basse ou dans l'état sensiblement sans pression du piston (10), celui-ci puisse coulisser dans sa position de rappel sous l'effet de la force de ressort servant de force de rappel.

6. Engrenage (1) selon la revendication 5, **caractérisé en ce que** le ressort (13) est disposé dans la deuxième partie d'espace (11.2) de l'espace de piston (11) et s'appuie par une extrémité sur une face d'extrémité du piston (10) et par l'autre extrémité sur l'unité de démarrage (5), en particulier sur le bord de l'espace de piston (11).

7. Engrenage (1) selon l'une des revendications 1 à 6, **caractérisé en ce que** le palier axial primaire (3) est réalisé comme un collet de butée.

8. Engrenage (1) selon la revendication 7, **caractérisé en ce que** la course axiale du piston (10) est dimensionnée de telle façon que, lors du mouvement vers la position de support, il déplace l'arbre mené dans une position axiale telle que le jeu des paliers axiaux du collet de butée soit sensiblement égal des deux côtés.

9. Procédé pour l'amélioration du comportement d'arrêt d'un engrenage (1) selon l'une des revendications 1 à 8, **caractérisé en ce qu'**il comprend les étapes suivantes :
lors du démarrage de l'engrenage (1) à partir de l'arrêt, le palier axial primaire (3) est provisoirement désactivé tandis que le palier axial secondaire (4) est activé, de sorte que toutes les contraintes axiales de l'arbre mené sont absorbées par le palier axial secondaire (4) et
après la fin du démarrage, à l'inverse, le palier axial secondaire (4) est désactivé et le palier axial primaire (3) activé, de sorte que toutes les contraintes axiales sont supportées par le palier axial primaire (3).

10. Procédé selon la revendication 9, **caractérisé en ce que** l'engrenage (1) est réalisé selon l'une des revendications 1 à 12 et, lors du démarrage de l'engrenage (1), l'unité de démarrage (5) est actionnée par l'arrivée d'huile de lubrification provenant de l'alimentation en huile sous pression, de sorte que le piston (10) est déplacé dans sa position de support et que l'arbre mené est seulement supporté par le palier axial secondaire (4), et
après la fin du démarrage, la pression provenant de l'alimentation en huile sous pression est désactivée et le piston (10) est déplacé dans sa position de rappel au moyen de la force du ressort (13) agissant comme une force de rappel.

11. Procédé selon l'une des revendications 9 ou 10, **caractérisé en ce que** la position du piston (10) est détectée et transmise aux fins d'analyse à une installation de commande.

12. Procédé selon l'une des revendications 9 à 11, **caractérisé en ce que** la fin du démarrage et la désactivation du palier axial secondaire (4) ainsi que l'activation du palier axial primaire (3) se produisent en fonction d'au moins une des conditions suivantes :
- écoulement d'une certaine durée du processus de démarrage ;
- arrivée à une certaine vitesse de révolution relative de l'arbre menant ou de l'arbre mené de l'engrenage (1) ;
- arrivée à une certaine vitesse de rotation de l'arbre menant ou de l'arbre mené de l'engrenage (1).
